# EUROPEAN PATENT APPLICATION

(11) **EP 4 542 970 A1**
(43) Date of publication of application: **23.04.2025**
(21) Application number: 23838936.5
(22) Date of filing: 11.07.2023
(51) Int. Cl.: H04L 67/63, G06Q 10/04, G06Q 90/00

(54) **RESOURCE SCHEDULING METHOD, APPARATUS AND DEVICE**

(30) Priority: 15.07.2022 CN 202210836035
(71) Applicant: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: FU, Yuexia, Beijing 100032 (CN); LU, Lu, Beijing 100032 (CN); SUN, Tao, Beijing 100032 (CN)
(74) Representative: Murgitroyd & Company
(86) International application number: PCT/CN2023/106771
(87) International publication number: WO 2024/012445

(57) **Abstract**

The present disclosure provides a resource scheduling method, device and apparatus. The method includes: receiving a service request, where the service request carries service requirement; generating a resource provider list of resource providers that meet the service requirement based on the service requirement and status of the resource providers; selecting a target resource provider in the resource provider list based on the resource provider list and first information; wherein the first information is used to indicate a global optimization goal; and calling the target resource provider to provide service.

## Description

### CROSS-REFERENCE TO RELATED APPLICATION

The present application is filed based on and claims the priority of Chinese Application No. 202210836035.3 filed on July 15, 2022, the disclosure of which are incorporated in their entireties by reference herein.

### TECHNICAL FIELD

The present disclosure relates to the field of communication technologies, and in particular to a resource scheduling method, device and apparatus.

### BACKGROUND

In the related network scheduling strategy, service scheduling is based on a single-time user service request, considers the user's service request to match an optimal node for it, thereby achieving a single-time optimization. However, the single-time optimization is not always the global performance optimization.

Since the status of the network and resource information of the data center are not aware of each other, when a user requests a certain service, the network cannot route the service request to the best service node, which affects the user experience and reduces the efficiency of computing resources in the network.

### SUMMARY

The technical problem to be solved by the present disclosure is to provide a resource scheduling method, device and apparatus, which, by introducing a global optimization goal, can schedule service request to the optimal target resource provider for service from a global optimal perspective, thereby improving resource service efficiency in the network.

In order to solve the above technical problem, the technical solution of the present disclosure is as follows.

A resource scheduling method, includes:
receiving a service request; wherein the service request carries service requirement;
according to the service requirement and status of resource providers, generating a resource provider list of resource providers that meet the service requirement;
selecting a target resource provider in the resource provider list according to the resource provider list and first information; wherein the first information is used to indicate a global optimization goal; and
calling the target resource provider to provide service.

Optionally, after calling the target resource provider to provide service, the method further includes:
sending second information to a first resource party in a case where the service meets the global optimization goal; wherein the first resource party includes a resource user and/or a resource provider, and the second information is used to motivate indicate an incentive for the first resource party to adapt to the global optimization goal.

Optionally, the incentive indicated in the second information is determined based on the global optimization goal.

Optionally, when the global optimization goal includes a first global optimization goal corresponding to a global transaction resource volume indicator, the incentive is positively correlated with a transaction resource volume of a current service;
when the global optimization goal includes a second global optimization goal corresponding to a global total resource transaction price indicator, the incentive is positively correlated with a total resource transaction price of a current service;
when the global optimization goal includes a third global optimization goal corresponding to a global energy consumption indicator, the incentive is negatively related to an energy consumption of a current service;
when the global optimization goal includes a fourth global optimization goal corresponding to a global service stability indicator, the incentive is positively correlated with stability of the current service;
when the global optimization goal includes a fifth global optimization goal corresponding to a global carbon emission indicator, the incentive is negatively related to the carbon emission indicator of a current service.

Optionally, the selecting a target resource provider in the resource provider list according to the resource provider list and first information, includes:
in the resource provider list, selecting resource providers that report a predicted value of the global optimization goal to form a target resource provider list;
selecting a resource provider that meets the service requirement from the target resource provider list as the target resource provider.

Optionally, the predicted value of the global optimization goal is calculated by the resource provider based on the service requirement and historical resource target data of the resource provider.

Optionally, the global optimization goal includes at least one of the following:
a first global optimization goal corresponding to a global transaction resource volume indicator;
a second global optimization goal corresponding to a global total resource transaction price indicator;
a third global optimization goal corresponding to a global energy consumption indicator;
a fourth global optimization goal corresponding to a global service stability indicator; and
a fifth global optimization goal corresponding to a global carbon emission indicator.

One embodiment of the present disclosure further provides a resource scheduling device, including:
an obtaining module configured to receive a service request; wherein the service request carries service requirement;
a processing module configured to, according to the service requirement and status of resource providers, generate a resource provider list of resource providers that meet the service requirement; select a target resource provider in the resource provider list according to the resource provider list and first information, wherein the first information is used to indicate a global optimization goal; and call the target resource provider to provide service.

Optionally, the resource scheduling device further includes:
an incentive module configured to send second information to a first resource party in a case where the service meets the global optimization goal; wherein the first resource party includes a resource user and/or a resource provider, and the second information is used to indicate an incentive for the first resource party to adapt to the global optimization goal.

One embodiment of the present disclosure further provides a computing device, including: a processor and a memory storing a computer program; wherein the computer program, when executed by the processor, causes the processor to perform the above method.

One embodiment of the present disclosure further provides a computer-readable storage medium, including instructions stored thereon; wherein the instructions, when executed on a computer, causes the computer to perform the above method.

The above solutions of the present disclosure include at least the following beneficial effects.

In this embodiment of the present disclosure, a service request initiated by a user is received, where the service request carries a service requirement; a resource provider list of the resource providers that meet the service requirement, is generated according to the service requirement and status of resource providers; a target resource provider in the provider list is selected according to the resource provider list and a global optimization goal, where the global optimization goal is a target value corresponding to at least one service index of all resource providers; and the target resource provider is called to provide service. In this way, from a multi-party global optimal perspective, the service request can be scheduled to the optimal target resource provider for service, thereby improving resource service efficiency in the network.

### BRIEF DESCRIPTION OF THE DRAWINGS

FIG. 1 is a flow chart of a resource scheduling method according to an embodiment of the present disclosure;
FIG. 2 is a specific implementation flow chart of a resource scheduling method according to an embodiment of the present disclosure; and
FIG. 3 is a schematic diagram showing modules of a resource scheduling device according to an embodiment of the present disclosure.

### DETAILED DESCRIPTION

Exemplary embodiments of the present disclosure will be described hereinafter in a clear manner in conjunction with the accompanying drawings. Although exemplary embodiments of the present disclosure are shown in the drawings, it is to be understood that the present disclosure may be embodied in various forms and should not be limited by the embodiments set forth herein. Rather, these embodiments are provided for more thorough understanding of the present disclosure, and to fully convey the scope of the present disclosure to those skilled in the art.

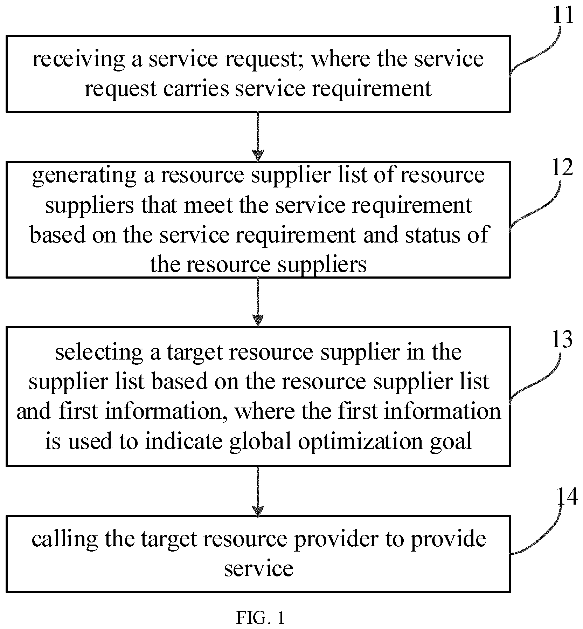

As shown in FIG. 1, one embodiment of the present disclosure provides a resource scheduling method. The method includes the following steps.

Step 11: receiving a service request; where the service request carries computing power service requirement.

Step 12: according to the service requirement and status of resource providers, generating a resource provider list of resource providers that meet the service requirement.

Step 13: selecting a target resource provider in the provider list according to the resource provider list and first information, where the first information is used to indicate global optimization goal of each resource provider in the resource provider list. The global optimization goal is a target value corresponding to at least one service index of all resource providers. Here, the global optimization goal includes at least one of the following: a first global optimization goal corresponding to a global transaction resource volume indicator; a second global optimization goal corresponding to a global total resource transaction price indicator; a third global optimization goal corresponding to a global energy consumption indicator; a fourth global optimization goal corresponding to a global service stability indicator; and a fifth global optimization goal corresponding to a global carbon emission indicator. It is to be noted that in embodiments of the present disclosure, resources may be computing resources, service resources and/or network resources, etc.

Step 14: calling the target resource provider to provide service.

In this embodiment of the present disclosure, a service request initiated by a user is received, where the service request carries a service requirement; a resource provider list of the resource providers that meet the service requirement, is generated according to the service requirement and status of resource providers; a target resource provider in the provider list is selected according to the resource provider list and a global optimization goal, where the global optimization goal is a target value corresponding to at least one service index of all resource providers; and the target resource provider is called to provide service. In this way, from a multi-party global optimal perspective, the service request can be scheduled to the optimal target resource provider for service, thereby improving resource service efficiency in the network.

In an optional embodiment of the present disclosure, after the above step 14, the method further includes:
Step 15: in a case where the service meets the global optimization goal, sending second information to a first resource party; where the first resource party includes a resource user and/or a resource provider, and the second information is used to indicate an incentive for the first resource party to adapt to the global optimization goal. The second information may indicate incentive, and the incentive may be issued in the form of credit values to encourage resource providers and users to actively adapt to the global optimization goal.

Here, when the user is a computing power user and the provider is a computing power resource or computing power service provider, a computing power incentive is determined based on the global optimization goal. For example, for the global transaction computing power indicator, the greater the transaction computing power of a current computing power service, the greater the computing power incentive; for the global computing power transaction total price indicator, the larger the computing power transaction total price of a current computing power service, the greater the computing power incentive; for the global computing power energy consumption indicator, the smaller the computing power energy consumption of a current computing service, the greater the computing power incentive; for the global computing power service stability indicator, the greater the computing power service stability of the current computing power service, the greater the computing power incentive; for the global carbon emission indicator, the smaller the carbon emission of the current computing power service, the greater the computing power incentive.

The same applies to network resources. For a global transaction network resource volume indicator, the larger the transaction volume of the current network resource service, the greater the incentive; for a global network total resource transaction price indicator, the larger the transaction total price of the current network resource service, the greater the incentive; for a global energy consumption indicator, the smaller the energy consumption of the current network resource service, the greater the incentive; for a global service stability indicator, the greater the stability of the network resource service, the greater the incentive; for a global carbon emission indicator, the smaller the carbon emission of the current network resource service, the greater the incentive.

In an optional embodiment of the present disclosure, in the step 12, by taking computing power resources or computing power services as an example, a computing power transaction platform generates a list of computing power providers (P1, P2, P3) that meet the current service requirement, based on the computing power service requirement and the status of the computing power providers.

In the step 13, the resource transaction platform selects an appropriate target resource provider (such as P1) from the list of providers that meet the service requirement, based on the computing power provider list and the global optimization goal.

In another optional embodiment of the present disclosure, the step 13 may include:

Step 131: in the resource provider list, selecting resource providers that report a predicted value of the global optimization goal to form a target resource provider list; where the predicted value of the global optimization goal is calculated by the resource provider based on the service requirement and historical resource target data of the resource provider;

Step 132: selecting a resource provider that meets the service requirement from the target resource provider list as the target resource provider.

In this embodiment, the resource provider can predict the predicted value of the global optimization goal based on its historical resource target data combined with the current service requirement.

At this point, there may be some resource providers that do not have the ability to report the global optimization goal (for example, P1 does not have, but P2 and P3 do). Based on the resource provider list and global optimization goal reporting status, it is preferred to select from the resource providers (such as P2, P3) that report the global optimization goal, such as selecting an appropriate target resource provider (such as P2) from the list of resource providers that meet service requirement.

In this embodiment, on the premise of satisfying a single-time user resource service request, a secondary optimization selection is made based on the global optimization goal. The resource transaction platform makes decisions based on the global optimization goals reported by the resource providers, so that from a multi-party global optimal perspective, the resource transaction platform can schedule the service request to the optimal target resource provider for service, thereby improving resource service efficiency in the network.

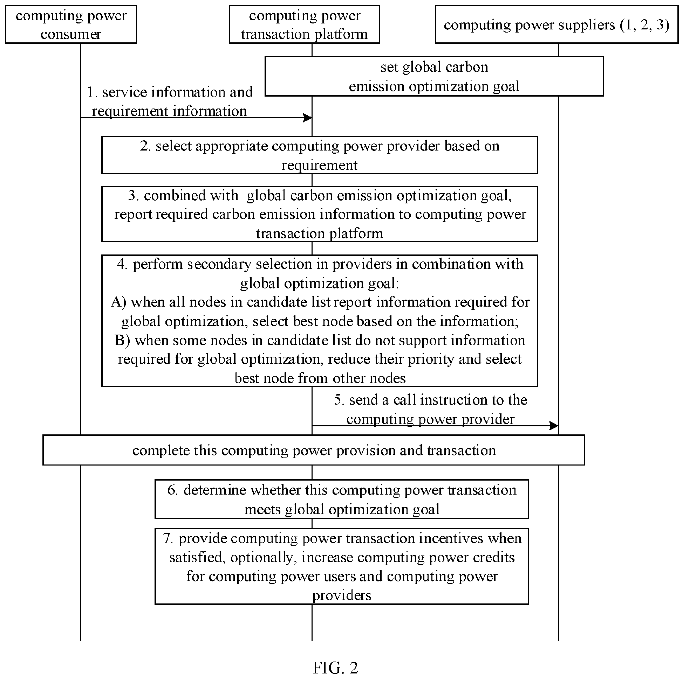

The specific implementation process of the above embodiment is described hereinafter with reference to FIG. 2. For example, when the lowest global carbon emission is the optimization goal, the global optimization goal is set to the lowest global carbon emission. Description is described hereinafter with an example of computing resources or computing services.

The computing power scheduling method that considers the global optimization goal, includes the following processes:
1. A computing power user (C1) initiates a computing power service request which carries a computing power service requirement.
2. A computing power transaction platform generates a list of computing power providers (P1, P2, P3) that meets the current service requirement, based on the computing power service requirement and status of computing power providers.
3. Based on the computing power global optimization goal, the computing power transaction platform needs to obtain computing power service carbon emission predicted values of computing power providers in the computing power provider list.

Optionally, the computing power provider can predict the carbon emission of this computing power service based on its historical carbon emission data and the current computing power transaction volume. For example, the historical carbon emission data of the computing power provider is that for a service requirement of a carbon emission requirement of 50 units, a carbon emission of an actual provided computing power service is 80; then, for the current service requirement of a carbon emission requirement of 100 units, it can be predicted that the carbon emission of this computing power service will be 160. Here, it is only an example and is not limited to this kind of prediction method.

In addition, there may be some computing power providers that do not have the ability to report computing power carbon emissions (for example, P1 does not have, but P2 and P3 do).

4. Based on the computing power provider list and carbon emission reporting status, it is preferred to select from the computing power providers (such as P2, P3) that report the computing power carbon emission information, such as selecting an appropriate computing power provider (such as P2) from the list of computing power providers that meet service requirement.

5. The computing power transaction platform sends final transaction decision information to the target computing power provider (P2) to start this computing power service.

Further, in order to encourage computing power providers and computing power users to contribute to the global optimization goal, computing power incentives that meet the global optimization goal can be issued:

6. The computing power transaction platform monitors provision of this computing power service and determines whether the service is completed as promised. If it is completed as promised, it is determined that this service meets the global optimization goals (P2, C1).

7. Incentive instruction information is issued to issue computing power incentives to this computing power user and computing power provider (P2, C1). Optionally, computing power incentives can be determined on considering the carbon emissions of this computing power service, for example, the lower the carbon emissions of this computing power service, the higher the computing power incentive value, which can be calculated based on actual scenarios.

In this embodiment, on the premise of satisfying a single-time user resource service request, a secondary optimization selection is made based on the global optimization goal. The computing power transaction platform makes decisions based on the global optimization goal predicted values reported by the computing power providers, so that after a single-time service that meets the global optimization goal is completed, incentives will be issued to participating users and computing power providers, which can be issued in the form of credit values, to encourage users and providers to actively adapt to the global optimization goal.

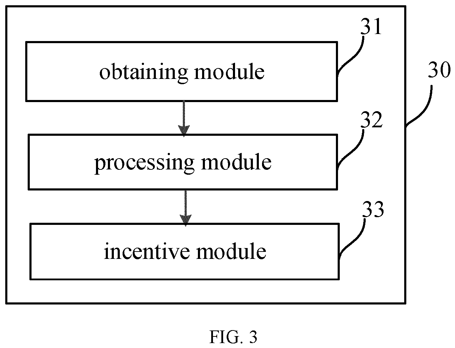

As shown in FIG. 3, one embodiment of the present disclosure further provides a resource scheduling device 30, which includes:
an obtaining module 31 used to receive a service request; where the service request carries service requirement;
a processing module 32 used to generate a resource provider list of resource providers that meet the service requirement, according to the service requirement and status of resource providers; select a target resource provider in the resource provider list according to the resource provider list and first information, where the first information is used to indicate a global optimization goal; and call the target resource provider to provide service.

Optionally, the resource scheduling device 30 further includes:
an incentive module 33 used to send second information to a first resource party in a case where the service meets the global optimization goal; where the first resource party includes a resource user and/or a resource provider, and the second information is used to indicate an incentive for the first resource party to adapt to the global optimization goal.

Optionally, the incentive indicated in the second information is determined based on the global optimization goal.

Optionally, when the global optimization goal includes a first global optimization goal corresponding to a global transaction resource volume indicator, the incentive is positively correlated with a transaction resource volume of the current service;
when the global optimization goal includes a second global optimization goal corresponding to a global total resource transaction price indicator, the incentive is positively correlated with a total resource transaction price of the current service;
when the global optimization goal includes a third global optimization goal corresponding to a global energy consumption indicator, the incentive is negatively related to an energy consumption of the current service;
when the global optimization goal includes a fourth global optimization goal corresponding to a global service stability indicator, the incentive is positively correlated with stability of the current service;
when the global optimization goal includes a fifth global optimization goal corresponding to a global carbon emission indicator, the incentive is negatively related to the carbon emission indicator of the current service.

Optionally, the selecting a target resource provider in the resource provider list according to the resource provider list and first information, includes:
in the resource provider list, selecting resource providers that report a predicted value of the global optimization goal to form a target resource provider list;
selecting a resource provider that meets the service requirement from the target resource provider list as the target resource provider.

Optionally, the predicted value of the global optimization goa is calculated by the resource provider based on the service requirement and historical resource target data of the resource provider.

Optionally, the global optimization goal includes at least one of the following:
a first global optimization goal corresponding to a global transaction resource volume indicator;
a second global optimization goal corresponding to a global total resource transaction price indicator;
a third global optimization goal corresponding to a global energy consumption indicator;
a fourth global optimization goal corresponding to a global service stability indicator; and
a fifth global optimization goal corresponding to a global carbon emission indicator.

It is to be noted that all implementations in the above method embodiments are applicable to the device embodiments and can achieve the same technical effects.

One embodiment of the present disclosure further provides a computing device, including: a processor and a memory storing a computer program. When the computer program is executed by the processor, the method as described above is performed. All implementations in the above method embodiment are applicable to this embodiment and can achieve the same technical effect.

One embodiment of the present disclosure further provides a computer-readable storage medium including instructions. When the instructions are executed on a computer, the computer is caused to perform the method as described above. All implementations in the above method embodiment are applicable to this embodiment and can achieve the same technical effect.

Those of ordinary skill in the art will appreciate that units and algorithm steps of each example described in conjunction with the embodiments disclosed herein can be implemented with electronic hardware, or a combination of computer software and electronic hardware. Whether these functions are performed in hardware or software depends on the specific application and design constraints of the technical solution. Skilled artisans may implement the described functions by using different modes for each specific application, but such implementations should not be considered to be beyond the scope of the present disclosure.

Those skilled in the art can clearly understand that for the convenience and simplicity of description, the specific operation processes of the systems, devices and units described above can be referred to the corresponding processes in the foregoing method embodiments, and will not be described again here.

In the embodiments provided in the present disclosure, it is to be understood that the disclosed devices and methods can be implemented in other ways. For example, the device embodiments described above are only illustrative. For example, division of units is only a logical function division, and there may be other division modes in actual implementation. For example, multiple units or components may be combined or may be integrated into another system, or some features can be ignored, or not implemented. On the other hand, coupling or direct coupling or communication connection between each other shown or discussed may be through some interfaces, and the indirect coupling or communication connection of the devices or units may be in electrical, mechanical or other forms.

The units described as separate components may or may not be physically separated, and the components shown as units may or may not be physical units, that is, they may be located in one place, or they may be distributed to multiple network units. Some or all of the units can be selected according to actual needs to achieve the purpose of the solution of this embodiment.

In addition, each function unit in various embodiments of the present disclosure may be integrated into one processing unit, or each unit may exist physically alone, or two or more units may be integrated into one unit.

If the functions are realized in the form of software function units and sold or used as independent products, they may be stored in a computer-readable storage medium. Based on this understanding, the essence of the technical solution of the present disclosure or the part that contributes to the related art or the part of the technical solution may be embodied in the form of a software product. The computer software product is stored in a storage medium, includes several instructions which enables a computer device (which may be a personal computer, a server, or a network device, etc.) to execute all or part of the steps of the methods described in various embodiments of the present disclosure. The foregoing storage medium includes various media capable of storing program codes such as U disk, mobile hard disk, ROM, RAM, magnetic disk or optical disk.

In addition, it is to be pointed out that in the device and method of the present disclosure, obviously, various components or various steps can be decomposed and/or recombined. These decompositions and/or recombination should be considered equivalent solutions of the present disclosure. Further, the steps for executing the above series of processes can naturally be executed in chronological order in the described order, but they do not necessarily need to be executed in chronological order, and some steps may be executed in parallel or independently of each other. For those of ordinary skill in the art, it can be understood that all or any steps or components of the methods and devices of the present disclosure can be implemented in any computing device (including processor, storage medium, etc.) or a network of computing devices in the form of hardware or firmware, software or their combination, which can be achieved by those of ordinary skill in the art using their basic programming skills after reading the description of the present disclosure.

Therefore, the object of the present disclosure can also be achieved by running a program or a set of programs on any computing device. The computing device may be a well-known general-purpose device. Therefore, the object of the present disclosure can also be achieved only by providing a program product including program codes for implementing the method or device. That is, such a program product also constitutes the present disclosure, and a storage medium storing such a program product also constitutes the present disclosure. Obviously, the storage medium may be any known storage medium or any storage medium developed in the future. It should also be pointed out that in the device and method of the present disclosure, obviously, various components or various steps can be decomposed and/or recombined. These decompositions and/or recombination should be considered equivalent solutions of the present disclosure. Further, the steps for executing the above series of processes can naturally be executed in chronological order in the described order, but do not necessarily need to be executed in chronological order, and some steps can be performed in parallel or independently of each other.

The above are the preferred embodiments of the present disclosure. It should be noted that for those of ordinary skill in the art, several improvements and modifications can be made without departing from the principles described in the present disclosure. These improvements and modifications should be regarded as falling within the scope of protection of the present disclosure.

## Claims

1. A resource scheduling method, comprising:
receiving a service request; wherein the service request carries service requirement;
generating a resource provider list of resource providers that meet the service requirement based on the service requirement and status of the resource providers;
selecting a target resource provider in the resource provider list based on the resource provider list and first information; wherein the first information is used to indicate a global optimization goal; and
calling the target resource provider to provide service.

2. The method according to claim 1, wherein after calling the target resource provider to provide service, the method further comprises:
sending second information to a first resource party in a case where the service meets the global optimization goal; wherein the first resource party includes a resource user and/or a resource provider, and the second information is used to indicate an incentive for incentivizing the first resource party to adapt to the global optimization goal.

3. The method according to claim 2, wherein the incentive indicated in the second information is determined according to the global optimization goal.

4. The method according to claim 3, wherein when the global optimization goal includes a first global optimization goal corresponding to a global transaction resource volume indicator, the incentive is positively correlated with a transaction resource volume of a current service;
when the global optimization goal includes a second global optimization goal corresponding to a global total resource transaction price indicator, the incentive is positively correlated with a total resource transaction price of a current service;
when the global optimization goal includes a third global optimization goal corresponding to a global energy consumption indicator, the incentive is negatively related to an energy consumption of a current service;
when the global optimization goal includes a fourth global optimization goal corresponding to a global service stability indicator, the incentive is positively correlated with stability of a current service;
when the global optimization goal includes a fifth global optimization goal corresponding to a global carbon emission indicator, the incentive is negatively related to the carbon emission indicator of a current service.

5. The method according to claim 1, wherein the selecting a target resource provider in the resource provider list based on the resource provider list and first information, includes:
in the resource provider list, selecting resource providers that report a predicted value of the global optimization goal to form a target resource provider list;
in the target resource provider list, selecting a resource provider that meets the service requirement as the target resource provider.

6. The method according to claim 5, wherein the predicted value of the global optimization goal is calculated by the resource provider based on the service requirement and historical resource target data of the resource provider.

7. The method according to any one of claims 1 to 6, wherein the global optimization goal includes at least one of the following:
a first global optimization goal corresponding to a global transaction resource volume indicator;
a second global optimization goal corresponding to a global total resource transaction price indicator;
a third global optimization goal corresponding to a global energy consumption indicator;
a fourth global optimization goal corresponding to a global service stability indicator; and
a fifth global optimization goal corresponding to a global carbon emission indicator.

8. A resource scheduling device, comprising:
an obtaining module configured to receive a service request; wherein the service request carries service requirement;
a processing module configured to generate a resource provider list of resource providers that meet the service requirement based on the service requirement and status of the resource providers; select a target resource provider in the resource provider list based on the resource provider list and first information, wherein the first information is used to indicate a global optimization goal; and call the target resource provider to provide service.

9. The device according to claim 8, further comprising:
an incentive module configured to send second information to a first resource party in a case where the service provided by the target resource provider meets the global optimization goal; wherein the first resource party includes a resource user and/or a resource provider, and the second information is used to indicate an incentive for incentivizing the first resource party to adapt to the global optimization goal.

10. A computing device, comprising: a processor and a memory storing a computer program; wherein the computer program, when executed by the processor, causes the processor to perform the method according to any one of claims 1 to 7.

11. A computer-readable storage medium, comprising instructions stored thereon; wherein the instructions, when executed on a computer, causes the computer to perform the method according to any one of claims 1 to 7.
